# EUROPÄISCHE PATENTSCHRIFT

(11) **EP 0 901 213 B1**
(45) Veröffentlichungstag und Bekanntmachung des Hinweises auf die Patenterteilung: **23.07.2003**
(21) Anmeldenummer: 98116377.7
(22) Anmeldetag: 28.08.1998
(51) Int. Cl.: G05B 19/042, H02J 13/00

(54) **Funkfernsteuervorrichtung zur Steuerung von elektrischen Verbrauchern an oder in einem Gebäude**
Radio remote control device for the control of electrical consumers at or within a building
Dispositif de radio-télécommande pour le commande d'appareils électriques pour ou dans un bâtiment

(30) Priorität: 02.09.1997 DE 19738231
(43) Veröffentlichungstag der Anmeldung: 10.03.1999
(73) Patentinhaber: SOMFY Feinmechanik und Elektrotechnik GmbH, 72108 Rottenburg (DE)
(72) Erfinder: Roehlk, Hermann, 71665 Vaihingen (DE); Buehner, Peter, 71679 Asperg (DE); Baerenwaldt, Uwe, 71691 Freiberg (DE); Hoefelschweiger, Martina, 70806 Kornwestheim (DE); Helmi, Hussam, 71672 Marbach (DE); Bolz, Peter, 71706 Markgroeningen (DE); Sorg, Dieter, 75050 Gemmingen (DE); Layes, Paul, 70806 Kornwestheim (DE); Frei, Martin, 71665 Vaihingen/Enz (DE)
(74) Vertreter: Jakelski, Joachim, Dr.

(56) Entgegenhaltungen:
- EP-A- 0 344 609
- WO-A-86/06890
- WO-A-94/28635
- DE-A- 2 832 942
- DE-A- 4 420 945
- US-A- 5 214 785
- US-A- 5 481 481
- SHEA M: "900 MHZ RADIO SIGNALS OPERATIONAL CONTROL" IEEE COMPUTER APPLICATIONS IN POWER,US,IEEE INC. NEW YORK, Bd. 5, Nr. 4, 1. Oktober 1992 (1992-10-01), Seiten 29-32, XP000320222 ISSN: 0895-0156

## Beschreibung

### STAND DER TECHNIK

Die Erfindung betrifft eine Funkfernsteuervorrichtung zur Steuerung von elektrischen Verbrauchern an oder in einem Gebäude, insbesondere für Privathaushalte, nach der Gattung des Hauptanspruchs.

Eine derartige Funkfernsteuervorrichtung für motorische Antriebseinheiten von Rolläden od.dgl. ist aus der DE 44 20 945 bekannt. Mittels einer Steuerzentrale können bei dieser bekannten Funkfernsteuervorrichtung mehrere Rollläden zeitabhängig oder wetterabhängig ferngesteuert werden. Zur Programmierung besitzt die Steuerzentrale eine Eingabetastatur. Im Hinblick auf die anzustrebende Kleinbauweise steht für eine solche Programmierung nur eine begrenzt Zahl von Tasten oder sonstigen Bedienungs- und Anzeigeelementen zur Verfügung, wodurch die Programmierung im allgemeinen relativ umständlich und kompliziert wird oder auch nur begrenzt möglich ist. Darüber hinaus verteuert eine derartige Tastatur die Steuerzentrale und damit die gesamte Funkfernsteuervorrichtung in erheblichem Maße.

Weiterhin sind beispielsweise aus der DE-OS 28 32 942, der EP 0 225 340 oder der EP 0 344 609 Fernsteuersysteme für elektrische Verbraucher bekannt, bei denen die Befehlssignale über ein Leitungsnetz übertragen werden, beispielsweise über das Stromversorgungsnetz oder ein Bussystem. Diese Systeme haben den Nachteil, daß entweder eine aufwendige Installation erforderlich ist oder daß Kompromisse bei der Anordnung der Verbraucher gemacht werden müssen, die dann jeweils an einem vorhandenen Netz angeordnet werden müssen. Hierdurch kommen solche Systeme für eine nachträgliche Installation kaum in Frage, schon gar nicht beispielsweise in Privathaushalten.

### VORTEILE DER ERFINDUNG

Die erfindungsgemäße Funkfernsteuervorrichtung mit den kennzeichnenden Merkmalen des Hauptanspruchs hat den Vorteil, daß zunächst durch die Funkübertragung der Steuerbefehle eine beliebige Anordnung der elektrischen Verbraucher und beliebige Positionsveränderungen dieser Verbraucher möglich sind. Durch die Programmierung der Steuerzentrale über einen PC benötigt die Steuerzentrale selbst keine Bedientasten oder Programmierhilfen, so daß nicht nur eine Realisierung in Kleinstbauweise möglich ist, sondern darüber hinaus eine sehr kostengünstige Realisierung. Ein weiterer Vorteil besteht darin, daß eine Programmierung mittels eines PCs wesentlich komfortabler ist und die Möglichkeit besteht, auf Datenträgern abgelegte Programme zu übertragen und gegebenenfalls zu modifizieren und zu aktualisieren. Durch den Bildschirm des PCs können Vorgänge besser dargestellt und die Programmierung hierdurch zusätzlich erleichtert werden. Insbesondere kann schnell und einfach ein Überblick über die in der Steuerzentrale einprogrammierten Daten erhalten werden.

Durch die in den Unteransprüchen aufgeführten Maßnahmen sind vorteilhafte Weiterbildungen und Verbesserungen der im Hauptanspruch angegebenen Funkfernsteuervorrichtung möglich.

Der PC kann zweckmäßigerweise direkt oder über eine Datenfernleitung oder ein Datennetz mit der Steuerzentrale verbunden werden. Dies hat den Vorteil, daß er gegebenenfalls auch während der Programmierung an seinem üblichen Arbeitsplatz verbleiben kann, der möglicherweise entfernt von der Steuerzentrale angeordnet ist. Die Programmierung erfolgt dann beispielsweise über das Telefonnetz oder über eine lose und provisorisch angebrachte Datenleitung.

Die Steuerzentrale kann auch in vorteilhafter Weise als in den PC einsteckbare Steckkarte ausgebildet werden, so daß sie praktisch überhaupt keinen zusätzlichen Platz benötigt. In diesem Falle muß sie eine eigene Stromversorgung besitzen, insbesondere ein Netzteil oder Steckernetzteil oder ein Akku, damit die Stromversorgung und die Funktionen erhalten bleiben, wenn der PC abgeschaltet wird. Die als Akku ausgebildete Stromversorgung kann in einfacher Weise über den PC und die dort vorhandene Stromversorgung aufgeladen werden. Dies kann entweder bei häufiger Benutzung des PCs für andere Zwecke während der Einschaltphasen erfolgen, oder aber die Steuerzentrale kann den PC selbst bei leerwerdendem Akku einschalten, um eine Wiederaufladung zu erreichen. Nach der Ladung kann die Steuerzentrale dann den PC in derselben Weise wieder selbst ausschalten. Ein weiterer Vorteil der Ausführung der Steuerzentrale als Steckkarte liegt darin, daß keinerlei eigenes Gehäuse für die Steuerzentrale benötigt wird, was wiederum zur Kosteneinsparung führt. Weiterhin wird keine externe Schnittstelle des PCs in Beschlag genommen, und es wird auch kein Anschlußkabel und kein Stecker benötigt.

Die Steuerzentrale kann in vorteilhafter Weise ohne Display ausgebildet sein, da ein solches infolge der Programmierung durch den PC nicht erforderlich ist. Dies führt ebenfalls zu einer Kosteneinsparung. Vorzugsweise wird die Steuerzentrale lediglich mit einer insbesondere als LED ausgebildeten Statusanzeige versehen, um Betriebszustände und Störungen anzeigen zu können. Diese Statusanzeige kann prinzipiell auch durch ein sehr kleines Display realisiert werden.

Die Steuerzentrale ist in vorteilhafter Weise mit einem insbesondere als Funkuhrmodul ausgebildeten Uhrenmodul versehen, um verschiedene elektrische Verbraucher in Abhängigkeit der Uhrzeit steuern zu können. Ein Funkuhrmodul führt nicht nur zu sehr exakten Schaltzeiten, sondern es sind auch keinerlei Einstellungen bei Zeitumstellungen od.dgl. erforderlich.

Die Steuerzentrale weist zweckmäßigerweise einen Controller (µC) und wenigstens einen Datenspeicher auf. Weiterhin besitzt die Steuerzentrale in vorteilhafter Weise wenigstens eine Schnittstelle für Erweiterungsmodule, die angeschlossen oder angesteckt werden können. Solche Erweiterungsmodule sind beispielsweise Speichererweiterungsmodule, Schnittstellenmodule oder Funktionserweiterungsmodule.

Um elektrische Verbraucher, wie beispielsweise Rolläden, Markisen oder andere Verdunkelungsvorrichtunge, wetterabhängig steuern zu können, sind in vorteilhafter Weise Meßeinrichtungen zur Erfassung von Wetterdaten und Zustandsdaten wie Lichtstärke, Windstärke, Außen- und Innentemperatur, Regen, Feuchtigkeit, Luftdruck, Sonnenstand u.dgl. vorgesehen, wobei wenigstens ein Funksender zur Übermittlung der erfaßten Meßdaten an die Steuerzentrale vorgesehen ist, die mit einem entsprechenden Funkempfänger versehen ist. Mehrere der Meßeinrichtungen können in vorteilhafter Weise in einer Wetterstation zusammengefaßt sein, die einen gemeinsamen Funksender zur Übermittlung aller erfaßten Wetterdaten besitzt.

Die Wetterstation kann vorzugsweise mit einer Solarstromversorgung versehen sein, um das Installieren von Versorgungsleitungen vermeiden zu können.

Die Steuerzentrale kann zweckmäßigerweise auch an ein Gebäudebussystem und/oder an das Telefonnetz angebunden sein, um beispielsweise an eine übergeordnete Zentrale oder über das Telefonnetz Statusabfragen zu ermöglichen. Weiterhin ist es möglich, übergeordnete Steuerbefehle der Zentrale zu übermitteln.

Durch Codierung der Funksteuersignale kann verhindert werden, daß Fehlbetätigungen durch fremde Funksignale erfolgen.

Die Funkempfänger können als separate Empfängermodule ausgebildet oder in den jeweiligen elektrischen Verbrauchern integriert sein, wo dies möglich oder vorgesehen ist.

### ZEICHNUNG

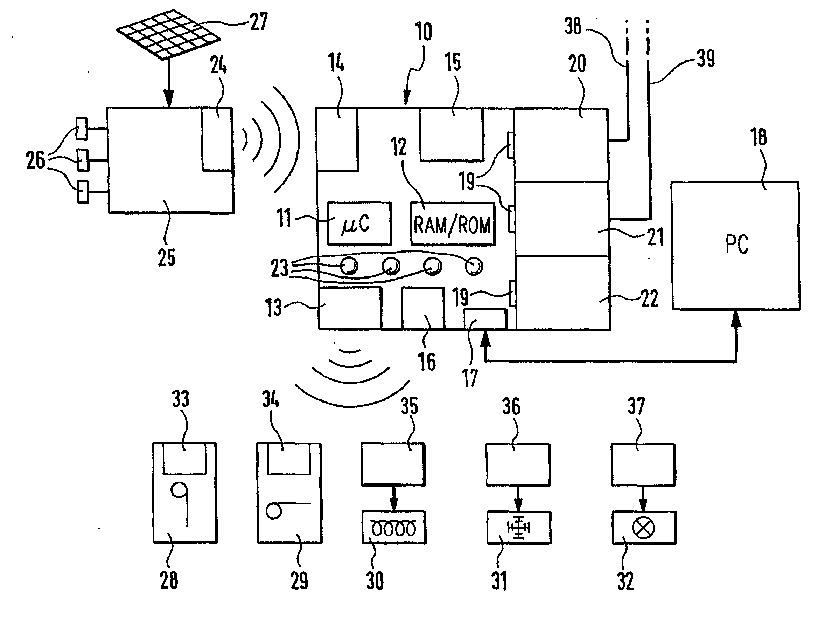

Ein Ausführungsbeispiel der Erfindung ist in der Zeichnung dargestellt und in der nachfolgenden Beschreibung näher erläutert. Die einzige Figur zeigt eine Funkfernsteuervorrichtung in einer schematischen Blockdarstellung als Ausführungsbeispiel der Erfindung.

Die in der einzigen Figur als Ausführungsbeispiel dargestellte Funkfernsteuervorrichtung zur Steuerung von elektrischen Verbrauchern an oder in einem Gebäude ist insbesondere für Privathäuser und Privatwohnungen geeignet, kann jedoch selbstverständlich auch gewerblich genutzt werden. Eine Steuerzentrale 10 besitzt als wesentliche Bestandteile einen Controller 11, der üblicherweise als Mikroprozessor oder Mikrorechner ausgebildet ist, eine Datenspeicheranordnung 12, einen Funksender 13, einen Funkempfänger 14, ein Versorgungsnetzteil 15, das auch als Steckernetzteil ausgebildet sein kann, ein insbesondere als Funkuhrmodul ausgebildetes Uhrenmodul 16, eine z.B. als V.24/RS 232 ausgebildete Schnittstelle 17 zum Anschluß eines PC 18 sowie weitere Schnittstellen 19, von denen im Ausführungsbeispiel drei dargestellt sind, um Erweiterungsmodule 20 - 22 anschließen zu können.

Außen am nicht näher dargestellten Gehäuse der Steuerzentrale 10 sind Kontrolleuchten 23 angeordnet, die beispielsweise als LED ausgebildet sind und als Statusanzeige dienen. Die Zahl dieser Kontrolleuchten 23 hängt von der Zahl der anzuzeigenden Gerätezustände ab, z.B. "Gerät o.k.", "Fehlerfall", "Gerät im Programmiermodus" u.dgl. Anstelle dieser Kontrolleuchten 23 kann als Statusanzeige auch ein kleines Display dienen.

Der Funkempfänger 14 steht mit einem Funksender 24 einer Wetterstation 25 in Funkverbindung. Diese Wetterstation 25 weist mehrere Zustandssensoren 26 auf, von denen im Ausführungsbeispiel zur Vereinfachung nur drei dargestellt sind. Solche Zustandssensoren 26 dienen beispielsweise zur Erfassung von Wetterdaten und Zustandsdaten wie Lichtstärke, Windstärke, Temperatur, Regen, Feuchtigkeit, Luftdruck, Sonnenstand, Lärmpegel u.dgl. Die so erfaßten Zustandsdaten werden mittels des Funksenders 24 der Steuerzentrale 10 übermittelt. Zur Stromversorgung der Wetterstation 25 dient eine Solarstromanlage 27, wobei selbstverständlich auch eine Stromversorgung über Leitungen prinzipiell möglich ist.

Anstelle einer Wetterstation 25 können auch mehrere Wetterstationen treten. Weiterhin können auch Zustandssensoren 26 an separaten Stellen am Gebäude angeordnet sein und entweder über einen eigenen Funksender verfügen oder über Leitungen mit der Wetterstation 25 verbunden sein. Weiterhin können auch innerhalb des Gebäudes solche Zustandssensoren angeordnet sein, um beispielsweise Zustandsdaten, wie die Innentemperatur, die Luftfeuchtigkeit im Innern u.dgl., an die Steuerzentrale 10 zu übertragen.

über den Funksender 13 steuert die Steuerzentrale 10 drahtlos mehrere im oder am Gebäude angeordnete elektrische Verbraucher 28 - 32. Die Zahl der elektrischen Verbraucher 28 - 32 kann selbstverständlich nahezu beliebig verkleinert oder vergrößert werden, je nach Auslegung der Steuerzentrale 10. Solche elektrischen Verbraucher können beispielsweise Rolläden, Markisen, Heizungen und Heizgeräte, Kühlanlagen und Kühlgeräte sowie Lichter und Beleuchtungen sein. In dieser Reihenfolge sind die im Ausführungsbeispiel dargestellten elektrischen Verbraucher 28 - 32 mit entsprechenden Symbolen versehen. Jedem der elektrischen Verbraucher 28 - 32 ist ein Empfangsmodul 33 - 37 zugeordnet, um die entsprechenden Funksteuersignale der Steuerzentrale 10 zu empfangen und in entsprechende elektrische Steuerbefehle umzuwandeln. Diese Empfangsmodule können wie im Falle der Empfangsmodule 33, 34 als im jeweiligen Verbraucher 28, 29 integrierte Empfangsmodule ausgebildet sein, oder sie sind im Falle der Verbraucher 30 - 32 als separate Empfangsmodule 35 - 37 ausgebildet. Dies hängt von den individuellen Einbaumöglichkeiten und dem erforderlichen Einbauaufwand ab. Im Falle von Rolläden oder Markisen können als Steuersignale bzw. Schaltbefehle beispielsweise Auf-/Zu-/Stopp-Steuerbefehle, im Falle von Beleuchtungen Ein-/Aus-/DIM-Wertsignale und im übrigen auch Taktbefehle und Monoflopfunktionen treten. Das Absenden der Funksteuersignale erfolgt in Abhängigkeit der Uhrzeit, die vom Uhrenmodul 16 vorgegeben wird, sofern Zeitsteuerfunktionen vorgegeben sind, oder in Abhängigkeit von Wetterdaten oder sonstigen Zustandsdaten, die die Steuerzentrale 10 von der Wetterstation 15 oder anderen Zustandssensoren empfängt.

Die Programmierung der Steuerzentrale 10 bzw. deren Controller 11 und Datenspeicheranordnung 12 erfolgt über den an einer Schnittstelle 17 angeschlossenen PC 18. Dieser besitzt hierzu eine nicht näher dargestellte Bedienungstastatur und einen Bildschirm. Dieser PC 18 braucht nur während der Programmierung in Betrieb zu sein und kann im übrigen abgeschaltet oder für andere Zwecke benutzt werden. Die Steuerung der Verbraucher 28 - 32 erfolgt unabhängig vom PC 18.

Zur Programmierung kann der PC 18 ein fertig vorliegendes, z.B. auf Datenträgern gespeichertes Programm in die Datenspeicheranordnung 12 übertragen. Diese kann beispielsweise in einem Festwertspeicher ein Grundprogramm enthalten, oder aber das gesamte Programm wird in einem nicht-flüchtigen, z.B. batteriegepufferten Arbeitsspeicher festgehalten. Bei einer Programmierung kann das augenblicklich vorliegende Programm auf dem Bildschirm des PCs 18 wiedergegeben und bei Bedarf geändert oder ergänzt werden. Programmänderungen und Programmumstellungen sind dadurch relativ leicht möglich, wobei die Steuerzentrale 10 selbst keine Programm- und Bedienungstasten benötigt. Beim Programmieren kann der PC 18 in einer Sonderbetriebsfunktion auch direkt die Empfangsmodule 33 - 37 bzw. die elektrischen Verbraucher 28 - 32 ansteuern.

Durch Verwendung eines anwenderspezischen Codes können alle Empfangsmodule 33 - 37 vor fremden Funksignalen geschützt werden, die zu Fehlbedienungen der elektrischen Verbraucher 28 - 32 führen könnten. Ein solcher Code wird in die Empfangsmodule 33 - 37 eingelernt. Dies kann durch ein spezielles Funksignal und/oder in einem speziellen Einlernmodus durch Eingabe über ingetrierte Dip-Schalter od.dgl. erfolgen.

Es ist selbstverständlich auch möglich, daß die Empfangsmodule 33 - 37 als Sende-/Empfangsmodule ausgebildet sind, um beispielsweise Istgrößen oder Zustandsdaten der Verbraucher an die Steuerzentrale 10 rückmelden zu können, falls dies vorgesehen oder erwünscht ist. Auf diese Weise ist es beispielsweise auch möglich, einzelne Verbraucher mittels der Steuerzentrale 10 zu regeln.

Im Ausführungsbeispiele sind drei Erweiterungsmodule 20 - 22 dargestellt, wobei auch hier die Zahl variabel ist. Solche Erweiterungsmodule können nach Bedarf mit der Steuerzentrale 10 über die Schnittstelle 19 bzw. Anschlüsse verbunden werden, oder die Erweiterungsmodule 20 - 22 werden direkt an der Steuerzentrale 10 angesteckt oder eingesteckt. über diese Erweiterungsmodule können die Funktionen und Möglichkeiten der Steuerzentrale erweitert werden. Beispielsweise kann das Erweiterungsmodul 22 als Speichererweiterungsmodul ausgebildet sein, und die als Schnittstellenmodule ausgebildeten Erweiterungsmodule 20 und 21 können zum Anschluß an eine Telefonleitung 38 und an ein Hausbussystem oder eine sonstige Busleitung 39 dienen. über solche externen Anschlüsse ist eine Fernabfrage des Zustands der Steuerzentrale 10 möglich, und es können auch von einem übergeordneten Steuersystem übergeordnete Steuerbefehle der Steuerzentrale 10 zugeleitet werden, die diese wiederum in Steuerbefehle für die elektrischen Verbraucher 28 - 32 umsetzt. Dabei ist es auch möglich, beispielsweise über die Telefonleitung 18 oder die Busleitung 39 von einer entfernten Stelle aus die Steuerzentrale 10 mittels des PCs 18 zu programmieren.

In einer weiteren Ausgestaltung der Erfindung kann die Steuerzentrale 10 auch als Steckkarte zum Einstecken in den PC 18 selbst ausgebildet sein. In diesem Falle entfallen eine gesonderte Verbindungsleitung sowie Steckverbinder, und es wird keine externe Schnittstelle des PCs 18 belegt. Die Steuerzentrale 10 muß in diesem Falle dennoch über eine eigene Spannungsversorgung verfügen, damit beim Abschalten des PCs 18 die Steuerung der Verbraucher 28 - 30 erhalten bleibt. Hierzu kann entweder das Versorgungsnetzteil 15 ein gesondertes Netzkabel besitzen oder als Steckernetzteil ausgebildet sein. Alternativ hierzu ist es auch möglich, einen Akku an der als Steckkarte ausgebildeten Steuerzentrale 10 anzuordnen, der die Stromversorgung übernimmt. Dieser kann dann über den Steckplatz des PCs in den Zeiten aufgeladen werden, in denen der PC 18 eingeschaltet ist. Sofern dieser nur relativ selten eingeschaltet wird, z.B. auch in Urlaubszeiten, kann die Steuerzentrale 10 bei leerwerdendem Akku auch den PC 18 selbst einschalten, um eine Ladung der Akkus zu erzwingen. Nach der Ladung kann die Steuerzentrale 10 dann den PC 18 auf dieselbe Weise wieder ausschalten.

## Patentansprüche

1. Funkfernsteuervorrichtung zur Steuerung von elektrischen Verbrauchern an oder in einem Gebäude in Abhängigkeit wenigstens der Uhrzeit und/oder von Meßdaten, mit einer einen Funksender aufweisenden Steuerzentrale und mit den elektrischen Verbrauchern jeweils zugeordneten Funkempfängern zur Übermittlung der von der Steuerzentrale empfangenen Funksteuersignale an die zugeordneten Verbraucher, **dadurch gekennzeichnet, daß** ein PC (18) zur Programmierung der Steuerzentrale (10) vorgesehen ist, wobei die Steuerzentrale (10) im übrigen die elektrischen Verbraucher (28 - 32) unabhängig vom PC (18) steuert.

2. Funkfernsteuervorrichtung nach Anspruch 1, **dadurch gekennzeichnet, daß** der PC (18) direkt oder über eine Datenfernleitung oder ein Datennetz mit der Steuerzentrale (10) verbunden ist.

3. Funkfernsteuervorrichtung nach Anspruch 1, **dadurch gekennzeichnet, daß** die Steuerzentrale (10) als in den PC (18) einsteckbare Steckkarte ausgebildet ist.

4. Funkfernsteuervorrichtung nach Anspruch 3, **dadurch gekennzeichnet, daß** die als Steuerzentrale (10) ausgebildete Steckkarte eine eigene Stromversorgung besitzt, insbesondere ein Netzteil (15) oder Steckernetzteil oder ein Akku.

5. Funkfernsteuervorrichtung nach Anspruch 4, **dadurch gekennzeichnet, daß** die als Akku ausgebildete Stromversorgung über den PC (18) aufladbar ist.

6. Funkfernsteuervorrichtung nach einem der vorhergehenden Ansprüche, **dadurch gekennzeichnet, daß** der PC (18) außerhalb von Programmiervorgängen im wesentlichen abgeschaltet oder anderweitig genutzt ist.

7. Funkfernsteuervorrichtung nach einem der vorhergehenden Ansprüche, **dadurch gekennzeichnet, daß** die Steuerzentrale (10) mit Ausnahme eines möglichen Betriebsschalters ohne manuelle Befehls- und/oder Steuerelemente ausgebildet ist.

8. Funkfernsteuervorrichtung nach einem der vorhergehenden Ansprüche, **dadurch gekennzeichnet, daß** die Steuerzentrale (10) ohne Display ausgebildet ist.

9. Funkfernsteuervorrichtung nach einem der vorhergehenden Ansprüche, **dadurch gekennzeichnet, daß** die Steuerzentrale (10) mit einer insbesondere als LED (23) ausgebildeten Statusanzeige versehen ist.

10. Funkfernsteuervorrichtung nach einem der vorhergehenden Ansprüche, **dadurch gekennzeichnet, daß** die Steuerzentrale (10) mit einem insbesondere als Funkuhrmodul ausgebildeten Uhrenmodul (16) versehen ist.

11. Funkfernsteuervorrichtung nach einem der vorhergehenden Ansprüche, **dadurch gekennzeichnet, daß** die Steuerzentrale (10) einen Controller (11) bzw. µC und wenigstens einen Datenspeicher (12) aufweist.

12. Funkfernsteuervorrichtung nach einem der vorhergehenden Ansprüche, **dadurch gekennzeichnet, daß** die Steuerzentrale (10) wenigstens eine Schnittstelle (19) für Erweiterungsmodule besitzt.

13. Funkfernsteuervorrichtung nach einem der vorhergehenden Ansprüche, **dadurch gekennzeichnet, daß** Meßeinrichtungen (26) zur Erfassung von Wetterdaten und Zustandsdaten wie LichtLichtstärke, Windstärke, Außen- und Innentemperatur, Regen, Feuchtigkeit, Luftdruck, Sonnenstand, Lärmpegel u.dgl. vorgesehen sind, und daß wenigstens ein Funksender (24) zur Übermittlung der erfaßten Meßdaten an die Steuerzentrale (10) vorgesehen ist, die mit einem entsprechenden Funkempfänger (14) versehen ist.

14. Funkfernsteuervorrichtung nach Anspruch 13, **dadurch gekennzeichnet, daß** mehrere der Meßeinrichtungen (26) in einer Wetterstation (25) zusammengefaßt sind, die einen Funksender (24) zur Übermittlung aller erfaßten Wetterdaten besitzt.

15. Funkfernsteuervorrichtung nach Anspruch 14, **dadurch gekennzeichnet, daß** die Wetterstation (25) mit einer Solarstromversorgung (27) versehen ist.

16. Funkfernsteuervorrichtung nach einem der vorhergehenden Ansprüche, **dadurch gekennzeichnet, daß** die Steuerzentrale (10) an ein Gebäudebussystem (39) und/oder an das Telefonnetz (38) angebunden ist.

17. Funkfernsteuervorrichtung nach einem der vorhergehenden Ansprüche, **dadurch gekennzeichnet, daß** die Funksteuersignale codiert sind.

18. Funkfernsteuervorrichtung nach einem der vorhergehenden Ansprüche, **dadurch gekennzeichnet, daß** die Funkempfänger als separate Empfangsmodule (35 - 37) ausgebildet oder als interne Empfangsmodule (33, 34) jeweils in den elektrischen Verbrauchern (28, 29) integriert sind.

## Claims

1. A radio-remote-control device for controlling electrical consumer devices on or in a building in a manner dependent upon at least upon the time and/or upon measurement data, with a central control device comprising a radio transmitter and with radio receivers associated in each case with the electrical consumer devices for transmitting the radio-control signals received from the central control device to the associated consumer devices, **characterized in that** a PC (18) is provided for programming the central control device (10), wherein the central control device (10) also controls the electrical consumer devices (28 to 32) independently of the PC (18).

2. A radio-remote-control device according to Claim 1, **characterized in that** the PC (18) is connected to the central control device (10) either directly or by way of a data trunk circuit line or a data network.

3. A radio-remote-control device according to Claim 1, **characterized in that** the central control device (10) is designed in the form of a plug-in card which can be plugged into the PC (18).

4. A radio-remote-control device according to Claim 3, **characterized in that** the plug-in card designed as the central control device (10) comprises a separate current supply, in particular a power pack (15) or a plug-in power pack or a storage battery.

5. A radio-remote-control device according to Claim 4, **characterized in that** the current supply constructed in the form of a storage battery can be charged by way of the PC (18).

6. A radio-remote-control device according to one of the preceding Claims, **characterized in that** the PC (18) is essentially switched off or used in a different manner outside programming procedures.

7. A radio-remote-control device according to one of the preceding Claims, **characterized in that** the central control device (10) is designed without manual command and/or control elements except for a possible operating switch.

8. A radio-remote-control device according to one of the preceding Claims, **characterized in that** the central control device (10) is designed without a display.

9. A radio-remote-control device according to one of the preceding Claims, **characterized in that** the central control device (10) is provided with a status indicator constructed in particular in the form of an LED (23).

10. A radio-remote-control device according to one of the preceding Claims, **characterized in that** the central control device (10) is provided with a clock module (16) constructed in particular in the form of a radio clock module.

11. A radio-remote-control device according to one of the preceding Claims, **characterized in that** the central control device (10) comprises a controller (11) or microcontroller and at least one data store (12).

12. A radio-remote-control device according to one of the preceding Claims, **characterized in that** the central control device (10) comprises at least one interface (19) for expansion modules.

13. A radio-remote-control device according to one of the preceding Claims, **characterized in that** measuring devices (26) are provided for detecting meteorological data and physical data such as light intensity, wind strength, outside and inside temperature, rain, humidity, air pressure, solar altitude, noise level and the like, and at least one radio transmitter (24) is provided for passing on the detected measurement data to the central control device (10) which is provided with a corresponding radio receiver (14).

14. A radio-remote-control device according to Claim 13, **characterized in that** a plurality of the measuring devices (26) are combined in a meteorological station (25) which comprises a radio transmitter (24) for passing on all the meteorological data detected.

15. A radio-remote-control device according to Claim 14, **characterized in that** the meteorological station (25) is provided with a solar-current supply (27).

16. A radio-remote-control device according to one of the preceding Claims, **characterized in that** the central control device (10) is connected to a building bus system (39) and/or to the telephone network (38).

17. A radio-remote-control device according to one of the preceding Claims, **characterized in that** the radio-control signals are encoded.

18. A radio-remote-control device according to one of the preceding Claims, **characterized in that** the radio receivers are constructed in the form of separate receiving modules (35 to 37) or are integrated as internal receiving modules (33, 34) in the electrical consumer devices (28, 29) in each case.

## Revendications

1. Dispositif de radio-télécommande pour commander des consommateurs électriques équipant un immeuble en fonction de l'heure et/ou de données de mesure, comprenant une centrale de commande avec un émetteur radio et des récepteurs radio associés à chacun des consommateurs électriques pour transmettre les signaux de commande reçus de la centrale de commande vers les consommateurs associés,
**caractérisé par**
un ordinateur personnel PC (18) pour programmer la centrale de commande (10), la centrale de commande (10) commandant du reste les consommateurs électriques (28-32) indépendamment de l'ordinateur personnel PC (18).

2. Radio-télécommande selon la revendication 1,
**caractérisée en ce que**
l'ordinateur personnel PC (18) est relié directement ou par une ligne de transmission de données à distance ou à un réseau de données à la centrale de commande (10).

3. Radio-télécommande selon la revendication 1,
**caractérisée en ce que**
la centrale de commande (10) est une carte enfichable dans l'ordinateur personnel PC (18).

4. Radio-télécommande selon la revendication 3,
**caractérisée en ce que**
la carte enfichable réalisée comme centrale de commande (10) possède sa propre alimentation électrique, notamment une partie de réseau (15) ou une pièce de connexion de réseau ou un accumulateur.

5. Radio-télécommande selon la revendication 4,
**caractérisée en ce que**
l'alimentation électrique en forme d'accumulateur se charge par l'intermédiaire de l'ordinateur personnel PC (18).

6. Radio-télécommande selon l'une quelconque des revendications précédentes,
**caractérisée en ce qu'**
en dehors des opérations de programmation, l'ordinateur personnel PC (18) est essentiellement coupé ou est utilisé à d'autres usages.

7. Radio-télécommande selon l'une quelconque des revendications précédentes,
**caractérisée en ce que**
la centrale de commande (10) ne comporte pas d'élément manuel d'ordre et/ou de commande à l'exception d'un éventuel interrupteur de mise en marche.

8. Radio-télécommande selon l'une quelconque des revendications précédentes,
**caractérisée en ce que**
la centrale de commande (10) ne comporte pas de moyen d'affichage.

9. Radio-télécommande selon l'une quelconque des revendications précédentes,
**caractérisée en ce que**
la centrale de commande (10) comporte un affichage d'état réalisé notamment sous la forme d'une diode LED (23).

10. Radio-télécommande selon l'une quelconque des revendications précédentes,
**caractérisée en ce que**
la centrale de commande (10) est munie d'un module d'horloge (16), en particulier un module d'horloge radio.

11. Radio-télécommande selon l'une quelconque des revendications précédentes,
**caractérisée en ce que**
la centrale de commande (10) comporte un contrôleur (11) ou micro-contrôleur µC et au moins une mémoire de données (12).

12. Radio-télécommande selon l'une quelconque des revendications précédentes,
**caractérisée en ce que**
la centrale de commande (10) comporte au moins une interphase (19) pour les modules d'extension.

13. Radio-télécommande selon l'une quelconque des revendications précédentes,
**caractérisée par**
des installations de mesure (26) pour saisir les données météorologiques et des données d'état telles que l'intensité lumineuse, la vitesse du vent, la température intérieure et extérieure, la pluie, l'humidité, la pression de l'air, le niveau du soleil, le niveau de bruit ou autre, et par au moins un émetteur radio (24) prévu pour transmettre les données de mesure saisies vers la centrale de commande (10), celle-ci étant équipée d'un récepteur radio (14) correspondant.

14. Radio-télécommande selon la revendication 13,
**caractérisée en ce que**
plusieurs installations de mesure (26) sont regroupées dans une station météorologique (25) équipée d'un émetteur radio (24) pour transmettre toutes les données météorologiques saisies.

15. Radio-télécommande selon la revendication 14,
**caractérisée en ce que**
la station météorologique (25) est équipée d'une alimentation par pile solaire (27).

16. Radio-télécommande selon l'une quelconque des revendications précédentes,
**caractérisée en ce que**
la centrale de commande (10) est reliée à un système de bus d'immeubles (39) et/ou au réseau téléphonique (38).

17. Radio-télécommande selon l'une quelconque des revendications précédentes,
**caractérisée en ce que**
les signaux de commande radio sont codés.

18. Radio-télécommande selon l'une quelconque des revendications précédentes,
**caractérisée en ce que**
les récepteurs radio sont réalisés sous la forme de modules de réception séparée (35-37) ou comme modules de réception interne (33, 34), intégrés chaque fois dans les consommateurs électriques (28, 29).
